# EUROPEAN PATENT SPECIFICATION

(11) **EP 3 621 254 B1**
(45) Date of publication and mention of the grant of the patent: **15.05.2024**
(21) Application number: 17903136.4
(22) Date of filing: 28.08.2017
(51) Int. Cl.: H04Q 11/00

(54) **DYNAMIC BANDWIDTH ALLOCATION METHOD AND APPARATUS, AND COMPUTER STORAGE MEDIUM**
DYNAMISCHES BANDBREITENZUWEISUNGSVERFAHREN UND -VORRICHTUNG UND COMPUTERSPEICHERMEDIUM
PROCÉDÉ ET APPAREIL D'ATTRIBUTION DYNAMIQUE DE BANDE PASSANTE, ET SUPPORT D'INFORMATIONS POUR ORDINATEUR

(30) Priority: 31.03.2017 CN 201710210544
(43) Date of publication of application: 11.03.2020
(73) Proprietor: Sanechips Technology Co., Ltd., Shenzhen, Guangdong 518055 (CN)
(72) Inventor: LI, Na, Shenzhen Guangdong 518055 (CN)
(74) Representative: Canzler & Bergmeier Patentanwälte Partnerschaft mbB
(86) International application number: PCT/CN2017/099236
(87) International publication number: WO 2018/176730

(56) References cited:
- EP-A1- 1 796 313
- EP-A1- 2 608 438
- EP-A1- 2 852 176
- EP-A2- 1 848 137
- CN-A- 101 667 962
- CN-A- 102 447 978
- CN-B- 102 104 549
- US-A1- 2010 316 376

## Description

### TECHNICAL FIELD

The present invention relates to the field of an optical communication technology and, in particular, a dynamic bandwidth allocation method, apparatus and computer storage medium.

### BACKGROUND

In an uplink system of an Ethernet passive optical network (EPON), an optical line terminal (OLT) uses a dynamic bandwidth allocation mechanism (DBA) to allocate an uplink bandwidth to an optical network unit (ONU). The ONU will report a bandwidth request value REPORT to the OLT according to its real traffic, and the OLT will allocate a bandwidth according to the request value reported by the ONU when the bandwidth is abundant and the request of the ONU does not exceed its contract bandwidth.

Although the request value REPORT reported by the ONU represents a real cache of the ONU at a certain moment, there are two manners of reporting the REPORT: a pre-manner and a post-manner, where the pre-REPORT manner, that is, after the ONU receives the bandwidth issued by the OLT, it reports REPORT first and then deducts the cache, which will lead to multiple waste when the OLT issues the bandwidth according to REPORT.

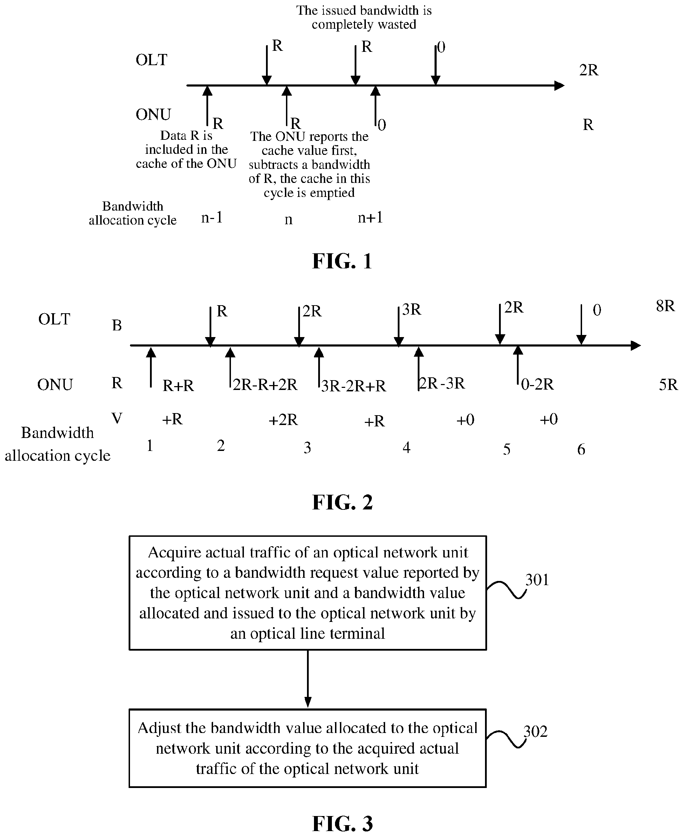

For convenience of description, the request value REPORT of the ONU is abbreviated as R, and the bandwidth issued by the DBA is abbreviated as B. Taken a simplest case as an example, as shown in FIG. 1, inlet traffic V of the ONU has only one pulse R, and R(n-1)=R in an (n-1)-th cycle is reported, the DBA will respond in an n-th cycle and issues a bandwidth of B(n)=R, although the ONU receives the bandwidth of R in the n-th cycle, it will report a current cache of R(n)=R before deducting the bandwidth R because of the pre-manner, therefore, in the n-th cycle, although the ONU reports a bandwidth of R, the cache is actually emptied, so a bandwidth of

B(n)=R(n-1)=R issued by the DBA in an (n+1)-th cycle is completely wasted. It may be seen that the result of bandwidth allocation according to B(n)=R(n-1) is that the inlet traffic of the ONU is one pulse R, the DBA issues a bandwidth of 2R, and half of the bandwidth is wasted.

When the inlet traffic of the ONU is not a pulse, but traffic with a non-uniform velocity, phenomenon in FIG. 2 will occur, as shown in FIG. 2:
In a bandwidth allocation cycle 1, data R is included in the cache of the ONU and reported to the DBA.

In a bandwidth allocation cycle 2, on OLT side, the DBA responds to the request value R of the ONU and issues a bandwidth of R. On ONU side, during a time period from the cycle 1 to the cycle 2, the inlet traffic is R, so an actual cache value of the ONU becomes 2R and the ONU applies for a bandwidth of 2R to the DBA. After that, the ONU subtracts the bandwidth of R issued by the DBA, so after calculation of the bandwidth allocation cycle 2, a real cache of the ONU is only R.

In a bandwidth allocation cycle 3, on the OLT side, the DBA responds to a request value 2R of the ONU and issues a bandwidth of 2R. On the ONU side, during a time period from the cycle 2 to the cycle 3, the inlet traffic is 2R, and the cache of R calculated in the cycle 2 is added to the inlet traffic, finally the ONU reports a cache value of 3R to the DBA. A bandwidth of 2R issued by the DBA is subtracted after reporting, so after calculation of the bandwidth allocation cycle 3 the real cache value of the ONU is R.

In a bandwidth allocation cycle 4, on the OLT side, the DBA responds to a request value 3R of the ONU and issues a bandwidth of 3R. On the ONU side, during a time period from the cycle 3 to the cycle 4, the inlet traffic is R, and a cache of R calculated in the cycle 3 is added to the inlet traffic, finally the ONU reports a cache value of 2R to the DBA. A bandwidth of 3R issued by the DBA is subtracted after reporting, the cache of the ONU is emptied after calculation of the bandwidth allocation cycle 4, and a bandwidth of R is actually wasted in this cycle.

In a bandwidth allocation cycle 5, on the OLT side, the DBA responds to the request value 2R of the ONU and issues a bandwidth of 2R. On the ONU side, during a time period from the cycle 4 to the cycle 5, the inlet traffic is 0, and the cache of the ONU in the cycle 4 has been emptied, so 0 is reported in the cycle 5, and the bandwidth of 2R issued by the DBA and received in the cycle 5 is also wasted.

At last, after this whole allocation circulation, it may be found that the actual traffic of the ONU is 5R, the DBA issues a bandwidth of 8R, the DBA allocates an extra bandwidth of 3R.

U.S. Patent Application US20100316376A1 discloses a method for processing bandwidth to improve the bandwidth assignment accuracy. The method for processing bandwidth includes: obtaining the buffered data amount reported by an optical network unit (ONU) at this time and the previous time; determining difference between the buffered data amount reported at this time and the buffered data amount reported at the previous time; and assigning bandwidth according to the difference of the buffered data amount and previously assigned bandwidth. A network device and a network system are also provided.

European Patent Application EP1796313A1 discloses a method for controlling accesses to a shared medium between a central communication unit (OLT) and several peripheral communication units (ONU1...3), there are status information (ONU1...3report) being sent from the peripheral communication units (ONU1...3) to the central communication unit (OLT), whereby the status information (ONU1...3report) are representing each information to be sent from a peripheral communication unit (ONU1...3) over the shared medium and/or requests for accessing the shared medium. The status information (ONU1...3report) being sent from the peripheral communication units during a given time interval (cycleN) are being collected and evaluated centrally. At least one control message (ONU1...3grant) is generated dependent to the result of the evaluation, the at least one control message (ONU1...3grant) representing information for controlling the accesses of the peripheral communication units (ONU1...3) to the shared medium. The control message (ONU1...3grant) is being sent to the peripheral communication units (ONU1...3).

Chinese Patent CN102104549B discloses a method and device for distributing the dynamic bandwidth of a passive optical network. The method comprises the steps that: an OLT (optical line terminal) obtains a bandwidth needed by a next stage of a T-CONT (transmission container) when a DBA (database administration) period reaches; the OLT judges that the needed bandwidth is less than the bandwidth distributed in the previous period and the difference between the needed bandwidth and the bandwidth distributed in the previous period is greater than a predetermined threshold; and the OLT builds a T-CONT configuration table, and the bandwidth distribution is performed according to the T-CONT configuration table. By the invention, the probability of packet loss can be reduced, and the quality of service (QoS) of operators is improved.

European Patent Application EP2852176A1 discloses a DBA method, including acquiring an upstream data size and a dynamic bandwidth report (DBRU) of a current transmission container (TCONT), estimating a bandwidth estimation value of the current TCONT; performing a bandwidth allocation calculation according to the bandwidth estimation value of the current TCONT and service layer agreement (SLA) information configured in advance, obtaining a bandwidth allocation value of the current TCONT. A DBA device and a XG PON system are disclosed, which may, in consideration of the adaptive negative feedback compensation during the bandwidth allocation, allocate bandwidth accurately to different TCONTs in the case of different overhead, thus avoiding lower flow such as a link error or a statistic error and achieving bandwidth adaptive compensation, implementing accurate bandwidth allocation, therefore avoiding the packet loss caused by insufficient allocation of bandwidth and the waste caused by excessive allocation of bandwidth.

European Patent Application EP2608438A1 discloses a dynamic bandwidth allocation method and apparatus, and relates to the field of communications. The method includes: obtaining bandwidth requests that are from optical network units and collected in a previous allocation cycle; calculating, according to the bandwidth requests, bandwidths allocated to all the optical network units in a current allocation cycle, where a start time of the bandwidths is a start point of an N th allocation cycle after the current allocation cycle, and N is a natural number; and delivering the calculated bandwidths to the optical network units. The apparatus includes a collection module, a calculation module, and a delivery module. In the present invention, the bandwidths allocated in the current allocation cycle are calculated according to the bandwidth requests collected in the previous allocation cycle, and the start time of the bandwidths is the start point of the N th allocation cycle after the current allocation cycle. Therefore, the start time of the allocated bandwidths is the same as a start time of the N th cycle, thereby eliminating overlapping of bandwidth requests in different allocation cycles and further improving the bandwidth utilization ratio.

### SUMMARY

An overview of subjects described in detail by the present disclosure is as follows. This overview is not intended to limit the protection scope of the claims.

Embodiments of the present invention provide a dynamic bandwidth allocation method, a dynamic bandwidth allocation apparatus, and a computer storage medium, as defined in claims, which can reduce bandwidth waste during uplink dynamic bandwidth allocation in an EPON system. According to the dynamic bandwidth allocation method and apparatus, and a computer storage medium provided by the embodiments of the present invention, the actual traffic of the optical network unit is predicted using the bandwidth request value of the optical network unit and the bandwidth issued by the optical line terminal. According to characteristics of pre-reporting the bandwidth request value REPORT, the bandwidth request value in the (n-1)-th cycle includes the bandwidth value issued in the (n-1)-th cycle, so the bandwidth value issued in the (n-1)-th cycle is adjusted to the value acquired by the difference between the bandwidth request value in the (n-1)-th cycle and the bandwidth value issued in the (n-1)-th cycle, thus the embodiments of the present invention can reduce the bandwidth waste during uplink dynamic bandwidth allocation in an EPON system.

Other aspects will become apparent upon reading and understanding of the drawings and detailed description.

### BRIEF DESCRIPTION OF DRAWINGS

The drawings are used to provide further understanding of technical solutions of the present application and form a part of the specification, the drawings in combination with the embodiments of the present application are used to explain the technical solutions of the present application, which will not form limitation on the technical solutions of the present application. In the drawings:
FIG. 1 is a schematic diagram of a scenario in which inlet traffic of the ONU is one pulse R and a bandwidth is issued according to B(n) = R(n-1);
FIG. 2 is a schematic diagram of a scenario in which inlet traffic of the ONU has a non-uniform velocity and a bandwidth is issued according to B(n) = R(n-1);
FIG. 3 is a flowchart of a dynamic bandwidth allocation method according to an embodiment of the present invention;
FIG. 4 is a schematic structural diagram of a dynamic bandwidth allocation apparatus according to an embodiment of the present invention;
Fig. 5 is a schematic diagram showing a scenario in which inlet traffic of the ONU is one pulse R and a bandwidth is issued based on B(n)=R(n-1)-B(n-1) according to an embodiment of the present invention;
FIG. 6 is a schematic diagram showing a scenario in which inlet traffic of the ONU has a non-uniform velocity and a bandwidth is issued based on B(n)=R(n-1)-B(n-1) according to an embodiment of the present invention;

The implementation of purpose, functions, characteristics and advantages of the present application will be further explained with reference to the drawings in combination with the embodiments.

### DETAILED DESCRIPTION

It should be understood that the specific embodiments described in the present disclosure are only for a purpose of explaining the present application and are not intended to limit the present application.

It should be noted that the embodiments of this application and characteristics in the embodiments may be combined with each other arbitrarily without conflicts.

Referring to FIG. 3, a flowchart of a dynamic bandwidth allocation method according to an embodiment of the present invention is shown. The dynamic bandwidth allocation method of the present embodiment may include steps described below.

Step 301, actual traffic of an optical network unit is acquired according to a bandwidth request value reported by the optical network unit and a bandwidth value allocated and issued to the optical network unit by an optical line terminal.

Step 302, the bandwidth value allocated to the optical network unit is adjusted according to the acquired actual traffic of the optical network unit.

In this embodiment, the step 301 in which the actual traffic of the optical network unit is acquired according to the bandwidth request value reported by the optical network unit and the bandwidth value allocated and issued to the optical network unit by the optical line terminal includes a step described below. When the bandwidth request value reported by the optical network unit in an (n-1)-th cycle includes the bandwidth value issued in the (n-1)-th cycle, the actual traffic of the optical network unit is a difference between the bandwidth request value in the (n-1)-th cycle and the bandwidth value issued in the (n-1)-th cycle, where n is a natural number greater than or equal to 1. In this embodiment, the step 302 in which the bandwidth value allocated to the optical network unit is adjusted according to the acquired actual traffic of the optical network unit includes a step described below. The bandwidth value issued in an n-th cycle is adjusted to a value acquired by a difference between the bandwidth request value in an (n-1)-th cycle and the bandwidth value issued in the (n-1)-th cycle, where n is a natural number greater than or equal to 1.

In this embodiment, the method further includes a step described below. The adjusted bandwidth value issued in the n-th cycle is transmitted to the optical network unit through downlink authorization information.

In the embodiments of the present invention, the actual traffic V of the ONU is predicted using the request value R of the ONU and the bandwidth B issued by the DBA. According to characteristics of the pre-REPORT manner, the request value R(n-1) in the (n-1)-th cycle includes the bandwidth value B(n-1) issued in the (n-1)-th cycle, so the bandwidth B(n) issued in the n-th cycle is adjusted to B(n)=R(n-1)-B(n-1). Therefore, the embodiments of the present invention provide a method for reducing bandwidth waste and the problem of bandwidth waste when the ONU reports REPORT in a pre-manner in the related art is solved.

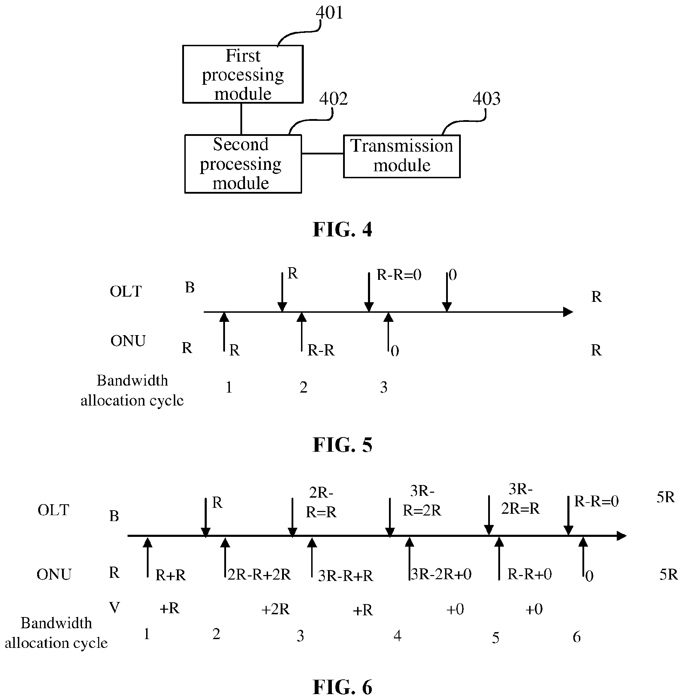

As shown in FIG. 4, a schematic structural diagram of a dynamic bandwidth allocation apparatus according to an embodiment of the present invention is shown. The dynamic bandwidth allocation apparatus according to an embodiment of the present invention includes a first processing module 401 and a second processing module 402.

The first processing module 401 is configured to acquire actual traffic of an optical network unit according to a bandwidth request value reported by the optical network unit and a bandwidth value allocated and issued to the optical network unit by an optical line terminal; and
the second processing module 402 is configured to adjust the bandwidth value allocated to the optical network unit according to the actual traffic of the optical network unit acquired by the first processing module 401.

In this embodiment, the first processing module 401 is configured to serve a difference between the bandwidth request value in an (n-1)-th cycle and the bandwidth value issued in the (n-1)-th cycle as the actual traffic of the optical network unit, when the bandwidth request value reported by the optical network unit in the (n-1)-th cycle includes the bandwidth value issued in the (n-1)-th cycle, where n is a natural number greater than or equal to 1.

In this embodiment, the second processing module 402 is configured to adjust the bandwidth value issued in an n-th cycle to a value acquired by a difference between the bandwidth request value in an (n-1)-th cycle and the bandwidth value issued in the (n-1)-th cycle, where n is a natural number greater than or equal to 1.

In this embodiment, the apparatus further includes a transmission module 403. The transmission module 403 is configured to transmit the adjusted bandwidth value issued in the n-th cycle to the optical network unit through downlink authorization information.

In this embodiment, the first processing module 401 and the second processing module 402 of the apparatus may be implemented by a central processing unit (CPU), a digital signal processor (DSP), a microcontroller unit (MCU), or a programmable gate array (FPGA) in practical applications, the transmission module 403 of the apparatus may be realized through a communication module (including a basic communication kit, an operating system, a communication module, a standardized interface and a protocol, and etc.) and a transceiver antenna in practical applications.

In the embodiments of the present invention, the actual traffic V of the ONU is predicted using the request value R of the ONU and the bandwidth B issued by the DBA. According to characteristics of the pre-REPORT, the request value R(n-1) in the (n-1)-th cycle includes the bandwidth value B(n-1) issued in the (n-1)-th cycle, so the bandwidth B(n) issued in the n-th cycle is adjusted to B(n)=R(n-1)-B(n-1). Therefore, the embodiments of the present invention provide a method for reducing bandwidth waste and the problem of bandwidth waste when the ONU reports REPORT in the pre-manner in the related art is solved.

The technical solutions of the present invention will be illustrated by embodiments in specific applications below.

### Embodiment one

In this embodiment, the inlet traffic V of the ONU only has one pulse R, as shown in FIG. 5.

In a bandwidth allocation cycle 1, data R is included in the cache of the ONU and reported to the DBA.

In a bandwidth allocation cycle 2, on OLT side, the DBA responds to the request value R of the ONU, since no bandwidth is issued in the cycle 1, so a bandwidth of B(n)=R(n-1)-B(n-1)=R-0 is issued in the cycle 2. On ONU side, during a time period from the cycle 1 to the cycle 2, the inlet traffic is 0, so an actual cache value of the ONU is R, and the ONU applies for a bandwidth of R to the DBA. Then the ONU subtracts the bandwidth R issued by the DBA, so after calculation of the bandwidth allocation cycle 2, the real cache of the ONU is 0.

In a bandwidth allocation cycle 3, on the OLT side, the DBA responds to the request value R of the ONU, since the bandwidth issued in the cycle 2 is R, a bandwidth of B(n)=R(n-1)-B(n-1)=R-R=0 is issued in the cycle 3.

It may be seen that in this embodiment, the result of bandwidth allocation according to B(n)=R(n-1)-B(n-1) includes that the actual traffic of the ONU is R, the bandwidth issued by the DBA is R, so no bandwidth is wasted.

### Embodiment two

In this embodiment, the inlet traffic V of the ONU has a non-uniform velocity, as shown in FIG. 6.

In a bandwidth allocation cycle 1, data R is included in the cache of the ONU, a bandwidth of 0 is issued by the DBA in this cycle.

In a bandwidth allocation cycle 2, on the OLT side, the DBA responds to the request value R of the ONU, since no bandwidth is issued in the cycle 1, so a bandwidth of B(n)=R(n-1)-B(n-1)=R-0=R is issued in the cycle 2. On the ONU side, during a time period from the cycle 1 to the cycle 2, the inlet traffic is R, so the actual cache value of the ONU is 2R and the ONU applies for a bandwidth of 2R to the DBA. Then the ONU subtracts the bandwidth R issued by the DBA, so after calculation of the bandwidth allocation cycle 2, the real cache of the ONU is R.

In a bandwidth allocation cycle 3, on the OLT side, the DBA responds to the request value 2R of the ONU, since the bandwidth of R is issued in the cycle 2, a bandwidth of B(n)=R(n-1)-B(n-1)=2R-R=R is issued in the cycle 3. On the ONU side, the cache value of the ONU in the cycle 2 is R, during a time period from the cycle 2 to the cycle 3, the inlet traffic of the ONU is 2R, so the actual cache value of the ONU turns out to be 3R and the ONU applies for a bandwidth of 3R to the DBA. Then the ONU subtracts the bandwidth of R issued by the DBA, after calculation of the bandwidth allocation cycle 3, the real cache of the ONU is 2R.

In a bandwidth allocation cycle 4, on the OLT side, the DBA responds to the request value 3R of the ONU, since the bandwidth of R is issued in the cycle 3, a bandwidth of B(n)=R(n-1)-B(n-1)=3R-R=2R is issued in the cycle 4. On the ONU side, the cache value of the ONU in the cycle 3 is 2R, during a time period from the cycle 3 to the cycle 4, the inlet traffic of the ONU is R, the actual cache value of the ONU turns out to be 3R and the ONU applies for a bandwidth of 3R to the DBA. Then the ONU subtracts the bandwidth of 2R issued by the DBA, so after calculation of the bandwidth allocation cycle 4, the real cache of the ONU is R.

In a bandwidth allocation cycle 5, on the OLT side, the DBA responds to the request value 3R of the ONU, since the bandwidth of 2R is issued in the cycle 4, a bandwidth of B(n)=R(n-1)-B(n-1)=3R-2R=R is issued in the cycle 5. On the ONU side, the cache value of the ONU in the cycle 4 is R, during a time period from the cycle 4 to the cycle 5, the inlet traffic of the ONU is 0, the actual cache value of the ONU turns out to be R and the ONU applies for a bandwidth of R to the DBA. Then the ONU subtracts the bandwidth of R issued by the DBA, so after calculation of the bandwidth allocation cycle 5, the real cache of the ONU is emptied.

In a bandwidth allocation cycle 6, on the OLT side, the DBA responds to the request value R of the ONU, since the bandwidth of R is issued in the cycle 5, a bandwidth of B(n)=R(n-1)-B(n-1)=R-R=0 is issued in the cycle 6. On the ONU side, the cache value of the ONU is emptied, during a time period from the cycle 5 to the cycle 6, the inlet traffic of the ONU is 0, so the actual cache value of the ONU is 0.

After the whole allocation circulation, it may be found that the actual traffic of the ONU is 5R, and the bandwidth issued by the DBA is 5R, so no bandwidth is wasted.

In the embodiments of the present invention, the actual traffic V of the ONU is predicted using the request value R of the ONU and the bandwidth B issued by the DBA. According to characteristics of the pre-REPORT manner, the request value R(n-1) in the (n-1)-th cycle includes the bandwidth value B(n-1) issued in the (n-1)-th cycle, so the bandwidth B(n) issued in the n-th cycle is adjusted to B(n)=R(n-1)-B(n-1). Therefore, the embodiments of the present invention provide a method for reducing bandwidth waste and the problem of bandwidth waste when the ONU reports REPORT in a pre-manner in the related art is solved.

Moreover, the embodiments of the present invention further provide an electronic device, the electronic device includes a processor and a memory; the memory stores computer executable instructions, the computer executable instructions implement following steps described below, when executed by the processor,.

Actual traffic of an optical network unit is acquired according to a bandwidth request value reported by the optical network unit and a bandwidth value allocated and issued to the optical network unit, and this step further includes a step described below. When the bandwidth request value reported by the optical network unit in an (n-1)-th cycle includes the bandwidth value issued in the (n-1)-th cycle, the actual traffic of the optical network unit is a difference between the bandwidth request value in the (n-1)-th cycle and the bandwidth value issued in the (n-1)-th cycle, where n is a natural number greater than or equal to 1; and the bandwidth value allocated to the optical network unit is adjusted according to the acquired actual traffic of the optical network unit. As an embodiment, when the computer executable instructions are executed by the processor, the computer executable instructions implement a step described below. When the bandwidth request value reported by the optical network unit in an (n-1)-th cycle includes the bandwidth value issued in the (n-1)-th cycle, a difference between the bandwidth request value in the (n-1)-th cycle and the bandwidth value issued in the (n-1)-th cycle serves as the actual traffic of the optical network unit, where n is a natural number greater than or equal to 1.

As an embodiment, when the computer executable instructions are executed by the processor, the computer executable instructions implement a following step. The bandwidth value issued in an n-th cycle is adjusted to a value acquired by a difference between the bandwidth request value in an (n-1)-th cycle and the bandwidth value issued in the (n-1)-th cycle, where n is a natural number greater than or equal to 1.

As an embodiment, when the computer executable instructions are executed by the processor, the computer executable instructions implement a step as follows. The adjusted bandwidth value issued in the n-th cycle is transmitted to the optical network unit through downlink authorization information.

The embodiments of the present invention further provide a computer readable storage medium used for storing computer executable instructions, when the computer executable instructions are executed, following steps are implemented. Actual traffic of an optical network unit is acquired according to a bandwidth request value reported by the optical network unit and a bandwidth value allocated and issued to the optical network unit; the bandwidth value allocated to the optical network unit is adjusted according to the acquired actual traffic of the optical network unit.

As an embodiment, the computer-executable instructions implement a step described below, when the computer-executable instructions are executed. When the bandwidth request value reported by the optical network unit in an (n-1)-th cycle includes the bandwidth value issued in the (n-1)-th cycle, a difference between the bandwidth request value in the (n-1)-th cycle and the bandwidth value issued in the (n-1)-th cycle serves as the actual traffic of the optical network unit, where n is a natural number greater than or equal to 1. As an embodiment, the computer-executable instructions implement a step described below, when the computer-executable instructions are executed. The bandwidth value issued in an n-th cycle is adjusted to a value acquired by a difference between the bandwidth request value in an (n-1)-th cycle and the bandwidth value issued in the (n-1)-th cycle, where n is a natural number greater than or equal to 1.

As an embodiment, the computer-executable instructions implement a step described below, when the computer-executable instructions are executed. The adjusted bandwidth value issued in the n-th cycle is transmitted to the optical network unit through downlink authorization information.

The above computer readable storage medium includes several instructions to enable a computer device (which may be a personal computer, a server, a network device, etc.) or a processor to perform a part of steps included in the methods described by various embodiments of the present disclosure. The computer readable storage medium includes a U disk, a removable hard disk, a read-only memory (ROM), a random access memory (RAM), a magnetic disk or an optical disk and other media that may store program codes.

It should be noted that terms of "comprise", "include" or any other variations in the present disclosure are intended to cover a non-exclusive inclusion, such that a process, method, article, or apparatus containing a list of elements includes not only those elements but also other elements not expressly listed, or elements inherent to the process, method, article, or apparatus. Without further restrictions, an element defined by a statement of "include a..." does not exclude presence of another identical element in a process, method, article, or apparatus that includes the same element.

The above-mentioned serial numbers of the embodiments of the present invention are for description only and do not represent advantages and disadvantages of the embodiments.

In several embodiments provided in the present application, it should be understood that the disclosed apparatuses and methods may be implemented in other ways. The apparatus embodiments described above are only schematic, for example, the division of the units is only a logic function division, in actual implementation, there may be other division methods, such as multiple units or components may be combined or integrated into another system, or some characteristics may be ignored or not implemented. In addition, coupling, direct coupling or communication connection between components shown or discussed may be indirect coupling or communication connection through some an interface, a device or a unit, and the connections may be electrical, mechanical or other forms.

The units described above as separate elements may or may not be physically separated, and the units displayed as units may or may not be physical units, that is, they may be located in one place or distributed over multiple network units, some or all of the units may be selected according to an actual need to achieve the purpose of the embodiments.

In addition, each functional unit in each embodiment of the present invention may be all integrated into one processing unit, each unit may be separately used as one unit, or at least two units may be integrated into one unit; the above-mentioned integrated units can be implemented in a form of hardware or in a form of hardware combining software functional units.

One of ordinary skill in the art may understand that all or part of the steps for implementing the above method embodiments may be completed by a hardware related to program instructions, the aforementioned programs may be stored in a computer readable storage medium, and when executed, the programs implement the steps of the above method embodiments; the aforementioned storage medium includes various media that may store program codes, such as a mobile storage device, a read-only memory (ROM), a random access memory (RAM), a magnetic disk or an optical disk.

Alternatively, if the above-mentioned integrated units of the present invention are implemented in a form of a software functional module and sold or used as an independent product, it may also be stored in a computer readable storage medium. Based on this understanding, the technical solutions of the embodiments of the present invention may be embodied in the form of a software product that is stored in a storage medium and includes several instructions to enable a computer device (which may be a personal computer, a server, or a network device, etc.) to perform all or part of the methods described in various embodiments of the present invention. However, the aforementioned storage medium include various media capable of storing program codes, such as a removable storage device, a ROM, a RAM, a magnetic disk or an optical disk.

The above description is only specific embodiments of the present invention, but the protection scope of the present invention is not limited to this. Any person familiar with the technical field may easily think of variations or substitutions within the technical scope disclosed by the present invention, and should be covered within the protection scope of the present invention. Therefore, the protection scope of the present invention should be based on the protection scope of the claims.

### INDUSTRIAL APPLICABILITY

The technical solutions of the embodiments of the present invention predicts the actual traffic of the optical network unit using the bandwidth request value of the optical network unit and the bandwidth issued by the optical line terminal. According to the characteristics of the pre-reporting manner of the bandwidth request value REPORT, the bandwidth request value in the (n-1)-th cycle includes the bandwidth value issued in the (n-1)-th cycle, so the bandwidth value issued in the (n-1)-th cycle is adjusted to a value acquired by the difference between the bandwidth request value in the (n-1)-th cycle and the bandwidth value issued in the (n-1)-th cycle, so that the embodiments of the present invention can reduce bandwidth waste during uplink dynamic bandwidth allocation in an EPON system.

## Claims

1. A dynamic bandwidth allocation method for an uplink system of an Ethernet passive optical network (EPON), comprising:
acquiring (301) actual traffic of an optical network unit according to a bandwidth request value reported by the optical network unit and a bandwidth value allocated and issued to the optical network unit; and
adjusting (302) the bandwidth value allocated to the optical network unit according to the acquired actual traffic of the optical network unit,
**characterized in that** the acquiring the actual traffic of the optical network unit according to the bandwidth request value reported by the optical network unit and the bandwidth value allocated and issued to the optical network unit comprises:
in response to that the bandwidth request value reported by the optical network unit in an (n-1)-th cycle comprises the bandwidth value issued in the (n-1)-th cycle, serving a difference between the bandwidth request value reported by the optical network unit in the (n-1)-th cycle and the bandwidth value issued in the (n-1)-th cycle as the actual traffic of the optical network unit,
wherein the adjusting the bandwidth value allocated to the optical network unit according to the acquired actual traffic of the optical network unit comprises:
adjusting the bandwidth value issued in an n-th cycle to a value acquired by a difference between the bandwidth request value in an (n-1)-th cycle and the bandwidth value issued in the (n-1)-th cycle, and
wherein n is a natural number greater than or equal to 1.

2. The method according to claim 1, further comprising:
transmitting the adjusted bandwidth value issued in the n-th cycle to the optical network unit through downlink authorization information.

3. A dynamic bandwidth allocation apparatus for an uplink system of an Ethernet passive optical network (EPON), comprising:
a first processing module (401), which is configured to acquire actual traffic of an optical network unit according to a bandwidth request value reported by the optical network unit and a bandwidth value allocated and issued to the optical network unit; and
a second processing module (402), which is configured to adjust the bandwidth value allocated to the optical network unit according to the acquired actual traffic of the optical network unit,
**characterized in that** the first processing module is configured to: in condition that the bandwidth request value reported by the optical network unit in an (n-1)-th cycle comprises the bandwidth value issued in the (n-1)-th cycle, serve a difference between the bandwidth request value in the (n-1)-th cycle and the bandwidth value issued in the (n-1)-th cycle as the actual traffic of the optical network unit,
wherein the second processing module is configured to adjust the bandwidth value issued in an n-th cycle to a value acquired by a difference between the bandwidth request value in an (n-1)-th cycle and the bandwidth value issued in the (n-1)-th cycle, and
wherein n is a natural number greater than or equal to 1.

4. The apparatus according to claim 3, further comprising:
a transmission module (403), which is configured to transmit the adjusted bandwidth value issued in the n-th cycle to the optical network unit through downlink authorization information.

5. The apparatus according to claim 3, wherein,
the first processing module (401) and the second processing module (402) are implemented by a processor and a memory, and the memory is adapted to store computer executable instructions to be executed by the processor to acquire the actual traffic and to adjust the bandwidth value.

6. A computer storage medium, storing computer executable instructions for execution of the dynamic bandwidth allocation method according to any one of claims 1 to 2.

## Patentansprüche

1. Dynamisches Bandbreitenzuweisungsverfahren für ein Uplink-System eines passiven optischen Ethernet-Netzwerks (EPON), umfassend:
Erfassen (301) eines tatsächlichen Verkehrs einer optischen Netzwerkeinheit gemäß einem Bandbreitenanforderungswert, der von der optischen Netzwerkeinheit gemeldet wird, und einem Bandbreitenwert, der der optischen Netzwerkeinheit zugewiesen und ausgegeben wird; und
Einstellen (302) des Bandbreitenwertes, der der optischen Netzwerkeinheit zugewiesen wird, gemäß dem erfassten tatsächlichen Verkehr der optischen Netzwerkeinheit,
**dadurch gekennzeichnet, dass** das Erfassen des tatsächlichen Verkehrs der optischen Netzwerkeinheit gemäß dem Bandbreitenanforderungswert, der von der optischen Netzwerkeinheit gemeldet wird, und dem Bandbreitenwert, der der optischen Netzwerkeinheit zugewiesen und ausgegeben wird, umfasst:
als Reaktion darauf, dass der Bandbreitenanforderungswert, der von der optischen Netzwerkeinheit in einem (n-1)-ten Zyklus gemeldet wird, den Bandbreitenwert umfasst, der in dem (n-1)-ten Zyklus ausgegeben wird, Bedienen einer Differenz zwischen dem
Bandbreitenanforderungswert, der von der optischen Netzwerkeinheit in dem (n-1)-ten Zyklus gemeldet wird, und dem Bandbreitenwert, der in dem (n-1)-ten Zyklus ausgegeben wird, als den tatsächlichen Verkehr der optischen Netzwerkeinheit,
wobei das Einstellen des Bandbreitenwertes, der der optischen Netzwerkeinheit zugewiesen wird, gemäß dem erfassten tatsächlichen Verkehr der optischen Netzwerkeinheit umfasst:
Einstellen des Bandbreitenwertes, der in einem n-ten Zyklus ausgegeben wird, auf einen Wert, der durch eine Differenz zwischen dem Bandbreitenanforderungswert in einem (n-1)-ten Zyklus und dem Bandbreitenwert, der in dem (n-1)-ten Zyklus ausgegeben wird, erfasst wird, und
wobei n eine natürliche Zahl größer oder gleich 1 ist.

2. Verfahren nach Anspruch 1, ferner umfassend:
Übertragen des eingestellten Bandbreitenwertes, der in dem n-ten Zyklus ausgegeben wird, an die optische Netzwerkeinheit durch Downlink-Autorisierungsinformationen.

3. Dynamische Bandbreitenzuweisungsvorrichtung für ein Uplink-System eines passiven optischen Ethernet-Netzwerks (EPON), umfassend:
ein erstes Verarbeitungsmodul (401), das konfiguriert ist, um einen tatsächlichen Verkehr einer optischen Netzwerkeinheit gemäß einem Bandbreitenanforderungswert, der von der optischen Netzwerkeinheit gemeldet wird, und einem Bandbreitenwert, der der optischen Netzwerkeinheit zugewiesen und ausgegeben wird, zu erfassen; und
ein zweites Verarbeitungsmodul (402), das konfiguriert ist, um den Bandbreitenwert, der der optischen Netzwerkeinheit zugewiesen wird, gemäß dem erfassten tatsächlichen Verkehr der optischen Netzwerkeinheit einzustellen,
**dadurch gekennzeichnet, dass** das erste Verarbeitungsmodul konfiguriert ist, um: unter der Bedingung, dass der Bandbreitenanforderungswert, der von der optischen Netzwerkeinheit in einem (n-1)-ten Zyklus gemeldet wird, den Bandbreitenwert umfasst, der in dem (n-1)-ten Zyklus ausgegeben wird, eine Differenz zwischen dem Bandbreitenanforderungswert in dem (n-1)-ten Zyklus und dem Bandbreitenwert, der in dem (n-1)-ten Zyklus ausgegeben wird, als den tatsächlichen Verkehr der optischen Netzwerkeinheit zu bedienen, wobei das zweite Verarbeitungsmodul konfiguriert ist, um den Bandbreitenwert, der in einem n-ten Zyklus ausgegeben wird, auf einen Wert einzustellen, der durch eine Differenz zwischen dem Bandbreitenanforderungswert in einem (n-1)-ten Zyklus und dem Bandbreitenwert, der in dem (n-1)-ten Zyklus ausgegeben wird, erfasst wird, und
wobei n eine natürliche Zahl größer oder gleich 1 ist.

4. Vorrichtung nach Anspruch 3, ferner umfassend:
ein Übertragungsmodul (403), das konfiguriert ist, um den eingestellten Bandbreitenwert, der in dem n-ten Zyklus ausgegeben wird, an die optische Netzwerkeinheit durch Downlink-Autorisierungsinformationen zu übertragen.

5. Vorrichtung nach Anspruch 3, wobei
das erste Verarbeitungsmodul (401) und das zweite Verarbeitungsmodul (402) durch einen Prozessor und einen Speicher implementiert sind und der Speicher ausgelegt ist, um computerausführbare Anweisungen zu speichern, die durch den Prozessor ausgeführt werden sollen, um den tatsächlichen Verkehr zu erfassen und den Bandbreitenwert einzustellen.

6. Computerspeichermedium, das computerausführbare Anweisungen zum Ausführen des dynamischen Bandbreitenzuweisungsverfahrens nach einem der Ansprüche 1 bis 2 speichert.

## Revendications

1. Procédé d'allocation de largeur de bande dynamique pour un système de liaison montante d'un réseau optique passif Ethernet (EPON), comprenant:
acquérir (301) un traffic réel d'une unité de réseau optique en fonction d'une valeur de demande de largeur de bande signalée par l'unité de réseau optique et d'une valeur de largeur de bande allouée et délivrée à l'unité de réseau optique; et
ajuster (302) la valeur de largeur de bande allouée à l'unité de réseau optique en fonction du traffic réel acquis de l'unité de réseau optique, **caractérisé en ce que** acquérir le traffic réel de l'unité de réseau optique en fonction de la valeur de demande de largeur de bande signalée par l'unité de réseau optique et de la valeur de largeur de bande allouée et délivrée à l'unité de réseau optique comprend:
en réponse au fait que la valeur de demande de largeur de bande signalée par l'unité de réseau optique dans un (n-1)-ième cycle comprend la valeur de largeur de bande délivrée dans le (n-1)-ième cycle, servir une différence entre la valeur de demande de largeur de bande signalée par l'unité de réseau optique dans le (n-1)-ième cycle et la valeur de largeur de bande délivrée dans le (n-1)-ième cycle en tant que traffic réel de l'unité de réseau optique,
dans lequel ajuster la valeur de largeur de bande allouée à l'unité de réseau optique en fonction du traffic réel acquis de l'unité de réseau optique comprend:
ajuster la valeur de largeur de bande délivrée dans un n-ième cycle à une valeur acquise par une différence entre la valeur de demande de largeur de bande dans un (n-1)-ième cycle et la valeur de largeur de bande délivrée dans le (n-1)-ième cycle, et
dans lequel n est un nombre naturel supérieur ou égal à 1.

2. Procédé selon la revendication 1, comprenant en outre:
envoyer la valeur de largeur de bande ajustée délivrée dans le n-ième cycle à l'unité de réseau optique par l'intermédiaire d'informations d'autorisation de liaison descendante.

3. Appareil d'allocation de largeur de bande dynamique pour un système de liaison montante d'un réseau optique passif Ethernet (EPON), comprenant:
un premier module de traitement (401), qui est configuré pour acquérir un traffic réel d'une unité de réseau optique en fonction d'une valeur de demande de largeur de bande signalée par l'unité de réseau optique et d'une valeur de largeur de bande allouée et délivrée à l'unité de réseau optique; et
un second module de traitement (402), qui est configuré pour ajuster la valeur de largeur de bande allouée à l'unité de réseau optique en fonction du traffic réel acquis de l'unité de réseau optique,
**caractérisé en ce que** le premier module de traitement est configuré pour: à condition que la valeur de demande de largeur de bande signalée par l'unité de réseau optique dans un (n-1)-ième cycle comprenne la valeur de largeur de bande délivrée dans le (n-1)-ième cycle, servir une différence entre la valeur de demande de largeur de bande dans le (n-1)-ième cycle et la valeur de largeur de bande délivrée dans le (n-1)-ième cycle en tant que traffic réel de l'unité de réseau optique,
dans lequel le second module de traitement est configuré pour ajuster la valeur de largeur de bande délivrée dans un n-ième cycle à une valeur acquise par une différence entre la valeur de demande de largeur de bande dans un (n-1)-ième cycle et la valeur de largeur de bande délivrée dans le (n-1)-ième cycle, et
dans lequel n est un nombre naturel supérieur ou égal à 1.

4. Appareil selon la revendication 3, comprenant en outre :
un module de transmission (403), qui est configuré pour envoyer la valeur de largeur de bande ajustée délivrée dans le n-ième cycle à l'unité de réseau optique par l'intermédiaire d'informations d'autorisation de liaison descendante.

5. Appareil selon la revendication 3, dans lequel,
le premier module de traitement (401) et le second module de traitement (402) sont mis en oeuvre par un processeur et une mémoire, et la mémoire est adaptée pour stocker des instructions exécutables par ordinateur à exécuter par le processeur pour acquérir le traffic réel et pour ajuster la valeur de largeur de bande.

6. Support de stockage informatique, stockant des instructions exécutables par ordinateur pour l'exécution du procédé d'allocation de largeur de bande dynamique selon l'une quelconque des revendications 1 à 2.
